Europäisches Patentamt

European Patent Office

Office européen des brevets

(19)

(11) EP 0 893 713 A2

(12) EUROPEAN PATENT APPLICATION

(43) Date of publication:
27.01.1999 Bulletin 1999/04

(51) Int Cl.$^6$: G02B 6/122, G01C 19/00

(21) Application number: 98304987.5

(22) Date of filing: 25.06.1998

(84) Designated Contracting States:
AT BE CH CY DE DK ES FI FR GB GR IE IT LI LU
MC NL PT SE
Designated Extension States:
AL LT LV MK RO SI

(30) Priority: 23.07.1997 US 899361

(71) Applicant: Litton Systems
Woodland Hills, California 91367-6675 (US)

(72) Inventor: Rahn, John P.
West Hills, California 91307 (US)

(74) Representative: Maury, Richard Philip et al
Sommerville & Rushton,
Business Link Building,
45 Grosvenor Road
St. Albans, Herts AL1 3AW (GB)

(54) Absorbing coating of optical media to prevent reflection, transmission and scatter

(57) Stray light incident upon a surface of an optical component is absorbed without reflection, scatter or transmission. A layer of a light absorbing material is placed upon the surface and the coated optical component is attached to the mount. The absorbing layer has a layer refractive index $n_L$ and an extinction coefficient k. The mount and absorbing layer have mount refractive index $n_m$ and layer refractive index $n_L$ and an extinction coefficient k such that light of the selected optical wavelength incident upon the absorbing layer from within the optical component is absorbed without reflection.

FIG. 4

## Description

### Background of the Invention

This invention relates generally to coatings for optical media and particularly to coatings for integrated optics components of fiber optic rotation sensor systems. Still more particularly, this invention relates to coatings for an integrated optics chip that includes optical waveguides to absorb stray light and prevent it from reflecting from surfaces of the chip into the output facets of the waveguides.

A preferred structure for a fiber optic rotation sensor includes a multifunction integrated optics chip (MIOC) placed between the light source and the sensing coil. The MIOC comprises a substrate formed of an optically active material such as lithium niobate. Portions of the upper surface of the substrate are doped to form optical waveguides. Optical fiber guides light to the MIOC, which also typically contains components such as phase modulators, polarizers, Y-couplers etc. that are used in forming the fiber optic rotation sensor system.

In the fiber optic rotation sensor architecture, the MIOC acts as a high extinction ratio (ER) polarizer. Accurate rotation measurement requires that only one polarization state be propagated and analyzed. Errors due to more than one polarization state are called polarization non-reciprocity (PNR) errors. Ideally the MIOC waveguides transmit no transverse magnetic (TM) polarized light since the index excess of the waveguides is negative for that polarization component. In order for the MIOC to act as a high extinction ratio polarizer, it is still necessary to control the stray TM polarized light that reflects from the substrate bottom and back up to the waveguide output facet. This stray light causes a reduction of the ER. The dominant component of this stray light is the one that makes one reflection at the bottom center of the guide and then, by symmetry, is reflected up to the output facet. For a 54 mm long and 2 mm thick MIOC substrate, this component has an incidence angle 85.8°.

### Summary of the Invention

The present invention provides an improved MIOC structure. The extinction ratio of the MIOC according to the present invention is greater than the extinction ratio of prior art MIOC devices.

The improved extinction ratio is accomplished by absorbing, without reflection, scattering or transmission, the stray light component that is incident on the side of the MIOC substrate opposite from the surface where the optical waveguides are formed. This stray light is absorbed by an absorbing layer attached to the MIOC.

A coating according to the present invention that is antireflective and absorbing for an optical wavelength $\lambda$ in an optical component having an ambient refractive index $n_A$ is adjacent to a mount having a mount refractive index $n_m$. An absorbing layer is formed on the optical component. The absorbing layer has a layer refractive index $n_L$ and an extinction coefficient k. The absorbing layer is coated on the bottom surface of the optical component, which is the ambient medium. The mount has a refractive index $n_m$, and the absorbing layer has a refractive index $n_L$ and an extinction coefficient k such that the selected optical wavelength incident upon the absorbing layer from within the optical component is absorbed without reflection.

The mount preferably comprises $SiO_2$ having mount refractive index $n_m$ of about 1.46, and the absorbing layer comprises SnTe having layer refractive index $n_L$ of about 6.3 and an extinction coefficient k of about 1.0. The optical thickness of the absorbing layer is about 1/4 of the selected wavelength.

The absorbing layer may alternatively comprise a multilayer stack of dielectric materials. Each layer has a thickness of approximately one quarter wavelength. The stack is formed of alternating layers of high refractive index $n_{HIGH}$ and low refractive index $n_{LOW}$ selected such that both absorption and antireflection of the selected optical wavelength are achieved.

### Brief Description of the Drawings

FIG. 1 is a top plan view of a simplified MIOC;

FIG. 2 is a front elevation view of the MIOC of FIG. 1;

FIG. 3A is a front elevation view of an MIOC according to the present invention in which an absorbing layer is adjacent the bottom side of the MIOC;

FIG. 3B is a front elevation view of a multilayer stack that may be used instead of the single absorbing layer of FIG. 3A;

FIG. 4 schematically illustrates a fiber optic rotation sensor that includes an MIOC having an optical coating according to the present invention;

FIG. 5 graphically illustrates the reflectivity error as a function of the angle of incidence for an MIOC according to the present invention formed to include a layer of SnTe and $SiO_2$ formed on a $LiNbO_3$ substrate;

FIG. 6 graphically illustrates the reflectivity error of the MIOC of FIG. 4 as a function of the absorbing layer thickness expressed as a percentage of departure from a nominal preferred thickness;

FIG. 7 graphically illustrates the reflectivity error of the MIOC of FIG. 4 as a function of the absorbing layer refractive index expressed as a percentage of departure from a nominal preferred value of refractive index; and

FIG. 8 graphically illustrates the reflectivity error of the MIOC of FIG. 4 as a function of the absorbing layer extinction coefficient expressed as a percentage of departure from a nominal preferred extinction coefficient.

## Description of the Preferred Embodiment

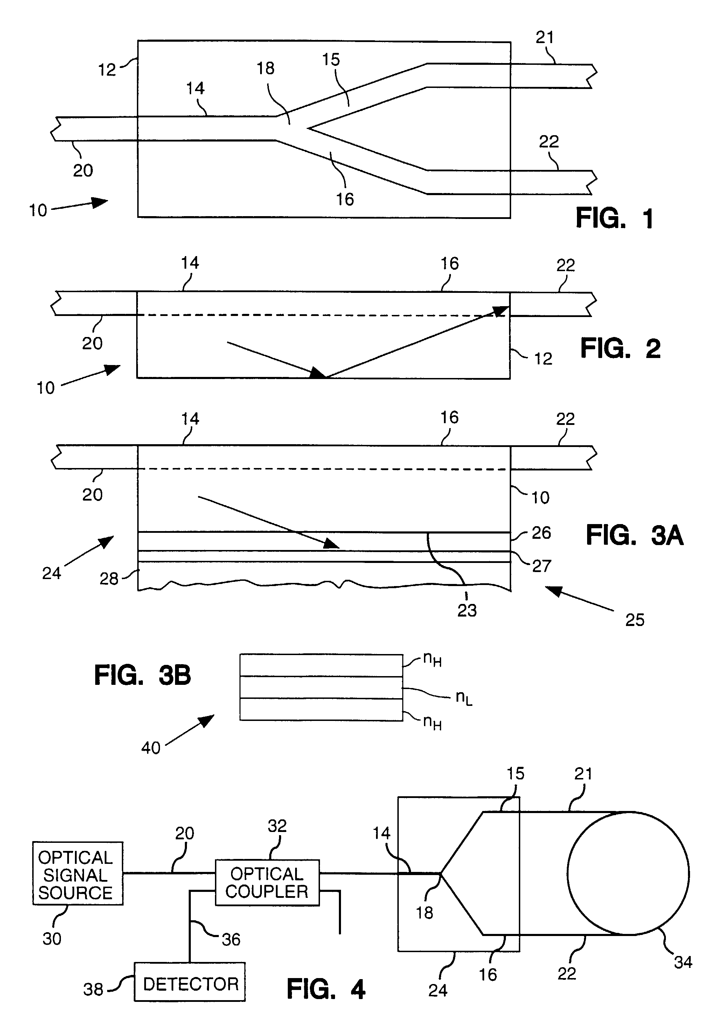

As shown in FIGS. 1 and 2, a simplified MIOC 10 includes an optical component 12 that preferably comprises $LiNbO_3$. A plurality of waveguides 14-16 are formed on the substrate 12 by doping portions of the substrate 12 according to well-known processes. The three waveguides 14-16 intersect to form a Y-coupler 18.

Optical fibers 20-22 are butt-coupled to the optical waveguides 14-16, respectively. In a fiber optic rotation sensor system 29 as shown in FIG. 4, an optical signal from an optical signal source 30 is input to the optical fiber 20. The fiber optic rotation sensor system 29 includes an MIOC 24 formed in accordance with the present invention. The optical signal propagates from the optical fiber 20 into the optical waveguide 14, which guides the optical signal to the Y-coupler 18. The Y-coupler 18 divides the optical signal between the optical waveguides 15 and 16. Portions of the optical signal guided by the optical waveguides 15 and 16 are then input to the optical fibers 21 and 22, respectively. A optical fiber sensing coil 34 is connected to the optical fibers 21 and 22 so that counter-propagating waves are input to the sensing coil. These counter-propagating waves then interfere in accordance with the well-known Sagnac effect to produce an optical signal that may be processed to measure rotation about an axis perpendicular to the plane of the sensing coil 34.

An optical coupler 32 maybe placed between the optical signal source 30 and the MIOC 24. After the counter-propagating waves interfere and propagate out of the sensing coil 34 and the MIOC 10, the optical coupler directs the sensing coil optical output signal to a detector 38, which produces electrical signals that indicate the Sagnac phase shift between the counter-propagating waves.

A suitable MIOC may have a length of about 54 mm and a thickness of about 2 mm. As shown in FIG. 2, it has been found that stray light reflecting from the center of the bottom face 23 of the MIOC substrate 12 to the ends of the optical waveguides 14-16 where output facets are formed causes a reduction in the performance of the MIOC as a high extinction ratio polarizer. This component of the stray light has an incidence angle of about 85.8° on the face 24 of the substrate 12.

Ordinary quarter-wave dielectric antireflective (AR) coatings do not perform well with this MIOC substrate medium, which has a refractive index of about 2.21. At the large incidence angle of approximately 86°, the light that is incident upon an ordinary AR coating layer will usually be totally internally reflected back into the MIOC and then cause polarization non-reciprocity (PNR) errors, which are well-known in the fiber optic rotation sensor art.

As shown in FIG. 3A, an antireflective optical absorbing device 25 according to the present invention may be formed by depositing an absorbing layer 26 on the MIOC 12 and then attaching the mount 28 to the absorbing layer 26. The mount 28 may be formed of $SiO_2$. The absorbing layer 26 preferably is formed of SnTe, which is a semiconductor that is often used as a tertiary compound with lead (i.e. PbSnTe) to make adjustable bandgap infrared detectors. SnTe has a refractive index $n = 6.3$ and an extinction coefficient $k = 1.09$ at a wavelength of 1550 nm. The coating thickness of the SnTe absorbing layer 26 for a wavelength of 1550 nm is 558 Angstroms. The thickness of the absorbing layer 26 to achieve both antireflection and absorption is a function of the optical wavelength.

The absorbing layer 26 is deposited on the bottom side 23 of the MIOC substrate 12 opposite from the side on which the optical waveguides 14-16 are formed. An adhesive 27 with an index of refraction similar to that of the mount 28 may be used to attach the coated MIOC to the mount 28.

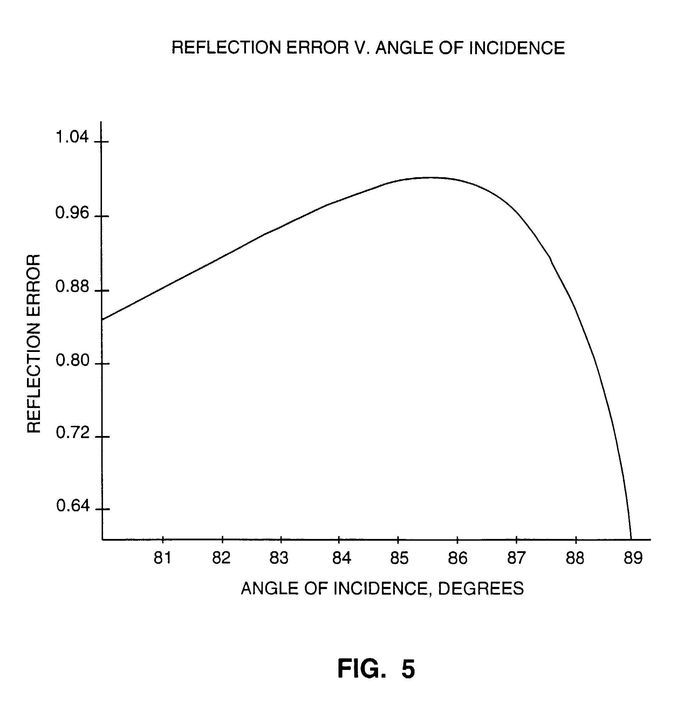

FIG. 5 illustrates the reflection error, 1-R (with R being the reflection coefficient), versus angle of incidence. From FIG. 1 it may be seen that the reflection minimum of 0.001 occurs at about 86°, as required to produce minimum reflection in the MIOC 12 having the dimensions given above. In prior art devices some light having angles of incidence that differ from the nominal value of 85.8° is reflected to the output facets of the optical waveguides 14-16. Therefore, it is an important feature of the present invention that the angular range for low reflections is large enough to give low reflection for incidence angles lower and higher than the nominal value of 86°.

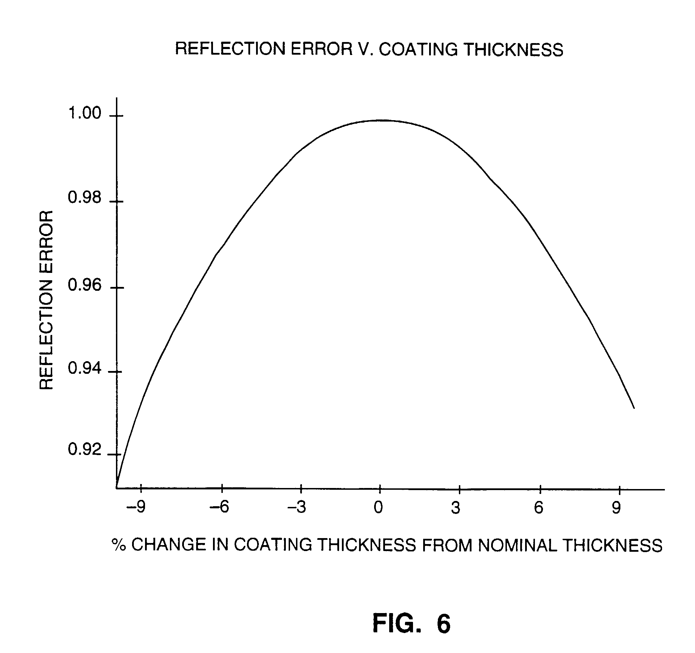

Another consideration is the dependence of the sensitivity of the coating 26 on its thickness. FIG. 6 shows the sensitivity of the AR coating 26 to thickness over a range departing ±10% from the nominal thickness of 558 Å. The thickness tolerance is seen to be within the capabilities of the present coating systems.

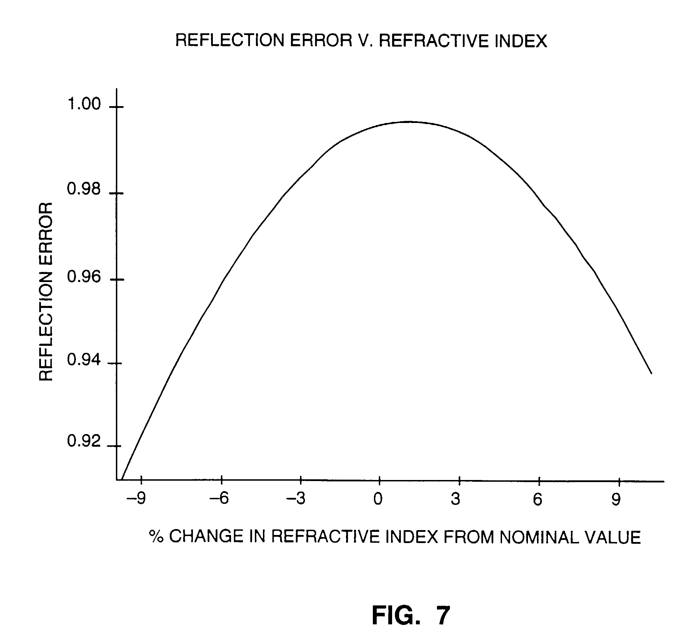

The sensitivity of the coating 26 to refractive index is another factor that must be considered in the design of the coating 26. FIG. 7 shows the sensitivity of the coating 26 to refractive index. The graph of FIG. 7 gives the reflection error as a function of the percent deviation of the refractive index from the nominal value of 6.3. The range of the horizontal axis in FIG. 7 is the nominal value ±10%.

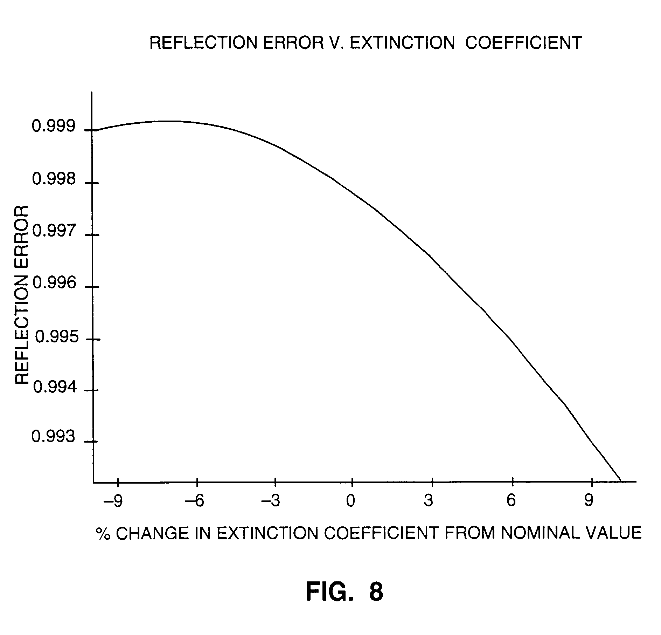

FIG. 8 graphically illustrates the coating sensitivity to variation in the extinction ratio over the same ±10% range of the nominal parameter. Again the sensitivity is not so critical that these parameters cannot be satisfactorily controlled.

Since the SnTe coating 28 has excellent absorption and low scatter it will result in a large extinction ratio improvement relative to partially absorbing (e.g. carbonblack) coatings on trenches or on roughened finishes which scatter quite profusely.

Principle of Operation

In the following explanation of the operation of the invention, the MIOC substrate 12 is referred to as the ambient medium because this is the medium in which the light propagates before being incident upon the absorbing layer 26. The MIOC substrate 12 is designated by the subscript "A." The layer 26 is designated by the subscript "L." The medium 28 (shown as semi-infinite) upon which the coated MIOC is mounted is referred to as the substrate 28 and designated by the subscript "m."

The coating 26 is similar to a single layer quarter wave antireflective coating but with one important additional requirement: the design must be such that no light is transmitted into the mount 28 opposite from which the light approaches. This latter condition can be satisfied by choosing the substrate 28 index, $n_m$ such that total internal reflection will occur at the interface between the layer 26 and the mount 28.

The design of a standard 1/4 wave antireflective layer is described below. The refractive index of the layer is

$$n_L = \sqrt{n_m n_A} \qquad (1)$$

where $n_A$ is the refractive index of the ambient medium (the MIOC substrate 12) from which the light approaches the antireflective layer 26S. This choice of antireflective layer refractive index provides the same reflection at the ambient-layer (AL) interface as at the layer-mount interface (LM). Therefore, the amplitude of the light returning from the AL interface is the same as the amplitude of the light reflected from the LM interface. The 1/4 wave layer thickness has a round trip length of 1/2 half wavelength, which causes the phase of light from the LM interface to be 180° from that of the ambient layer interface. The phase difference results in complete cancellation of the two interface reflections. Therefore, there is no reflection of the selected wavelength from the entire system.

In the present invention, there is no transmission through the mount 28. Therefore, the refractive index of the mount 28 is chosen for total internal reflection so that all of the light will be reflected from the LM interface. Therefore, if there were only very small absorption in the layer 26, the reflection at the AL interface would have to be 50% in order that the remaining transmitted 50% of the light that comes back from the layer-substrate interface 180° out of phase could be canceled to achieve antireflection. Recall from Snell's law of refraction that the incidence angle in the semiconductor layer is quite small by virtue of its high index of refraction. The intensity throughput in one round trip in a quarter wave layer is then approximately

$$T_{\frac{1}{4}} = e^{\frac{-2\pi k}{n_L}} \qquad (2)$$

where the semiconductor index, $n_L$, is 6.3 and the extinction ratio k is about 1.0 so that $T_{1/4} = e^{-1} = 0.37$. Therefore, the reflection, $R_{AL}$, of the AL interface need be only

$$R_{AL} = T_{\frac{1}{4}} T_{AL}^2 \qquad (3)$$

where $T_{AL}$ is the intensity transmission of the AL interface.

Eq. (3) shows that it is possible to trade off the k and n of the layer since R and T are more strongly related to n while $T_{1/4}$ is more strongly related to k. This tradeoff provides greater freedom in selection of materials for the layer 26 and the mount 28.

For simplicity, the requirements for index of the layer 26 have been described as if the incidence angle were 0°. When the incidence angle is non-zero, then an effective index concept may be used. The effective index for TM light (p-polarized) is

$$n_{eff} = \frac{n}{\cos\theta} \qquad (4)$$

where $\theta$ is the angle of the light ray with respect to the interface normal. For $\theta = 86°$ with n = 2.2, $n_{effective}$ is about 30, which is much larger than the index n = 2.2 for the mount 28. The refractive indices $n_A$ and $n_m$ in Eq. (1) should be converted to their effective values using Eq. (4). Then Eq. (1) results in the effective value of $n_L$, which should be converted from its effective value again using Eq. (4).

It should be pointed out that, if appropriate layer n and k can still not be found, then as illustrated in FIG. 3B, one may make a symmetric three layer quarter wave stack 40, where the first and third layers have a high index of refraction, $n_H$, and the middle layer has a lower index of refraction, $n_{LOW}$. This is an effective quarter wave layer, the so-called Herpin equivalent layer (HEL). At normal incidence, the effective index of refraction of this stack is

$$n_{eff0} = n_H^2 / n_{Low}. \qquad (5)$$

At non-normal incidence, Eq. (4) must again be applied. For normal operation, all of the layers in the HEL must have refractive indices large enough that total internal reflection does not occur. Even so, it will be understood that application of Eq. (5) provides greater freedom in selection of materials that will satisfy the requirement given above for n and k.

The structures and methods disclosed herein illustrate the principles of the present invention. The invention may be embodied in other specific forms without departing from its spirit or essential characteristics. The described embodiments are to be considered in all respects as exemplary and illustrative rather than restrictive. Therefore, the appended claims rather than the foregoing description define the scope of the invention. All modifications to the embodiments described herein that come within the meaning and range of equivalence of the claims are embraced within the scope of the invention.

## Claims

1. Apparatus for attachment to a surface of an optical component such that light propagating in the optical component toward the surface is absorbed without reflection and scattering, comprising:

   an absorbing layer formed on the surface of the optical component, the absorbing layer having a layer refractive index $n_L$, a layer thickness of about 1/4 of the wavelength of the light in the absorbing layer, and an extinction coefficient k; and
   a mount having a mount refractive index $n_m$ attached to the absorbing layer such that the absorbing layer is between the mount and the surface of the optical component, the absorbing layer refractive index $n_L$ and extinction coefficient k and the mount refractive index $n_m$ being selected such that the light incident from within the optical component upon the surface of optical component where the absorbing layer is formed is absorbed without reflection and scattering.

2. The apparatus of claim 1, further comprising an adhesive layer having a refractive index that is approximately equal to the refractive index $n_m$ of the mount

3. The apparatus of claim 1 wherein the mount comprises $SiO_2$ having mount refractive index $n_m$ of about 1.46, and the absorbing layer comprises SnTe having layer refractive index $n_L$ of about 6.3 and an extinction coefficient k of about 1.0, and the optical component comprises lithium niobate having an ambient refractive index $n_A$ of about 2.2.

4. The apparatus of claim 1 wherein the absorbing layer comprises multilayer stack of dielectric materials having alternating layers of high refractive $n_{HIGH}$ and low refractive index $n_{LOW}$.

FIG. 1

FIG. 2

FIG. 3A

FIG. 3B

FIG. 4

REFLECTION ERROR V. ANGLE OF INCIDENCE

FIG. 5

REFLECTION ERROR V. COATING THICKNESS

FIG. 6

REFLECTION ERROR V. REFRACTIVE INDEX

FIG. 7

REFLECTION ERROR V. EXTINCTION COEFFICIENT

FIG. 8